# EUROPEAN PATENT APPLICATION

(11) **EP 4 794 071 A1**
(43) Date of publication of application: **19.08.2026**
(21) Application number: 26156580.8
(22) Date of filing: 05.02.2026
(51) Int. Cl.: H01M 50/112, H01M 50/54

(54) **BATTERY, METHOD OF MANUFACTURING BATTERY, AND BATTERY MODULE/PACK**

(30) Priority: 17.02.2025 KR 20250020385
(71) Applicant: SAMSUNG SDI CO., LTD., Yongin-si, Gyeonggi-do 17084 (KR)
(72) Inventor: Hwang, San, 17084 Yongin-si, Gyeonggi-do (KR)
(74) Representative: Meissner Bolte Partnerschaft mbB

(57) **Abstract**

A battery (10) includes a plurality of electrode assemblies (30) each having a positive electrode plate and a negative electrode plate, each of the positive electrode plate and the negative electrode plate having an electrode tab (31), a battery can (20) having a plurality of compartment spaces (25) that accommodate each of the plurality of electrode assemblies (30) and expose each electrode tab (31) to an outside, and a cap assembly (40) fixed to the battery can (20) to seal the plurality of compartment spaces (25), the cap assembly (40) being electrically connected to each electrode tab (31).

## Description

### BACKGROUND

### 1. Field

The present invention relates to a battery, a method of manufacturing a battery and a battery module/pack.

### 2. Description of the Related Art

Batteries include secondary batteries that can be charged and discharged and primary batteries that cannot be recharged. Typically, a battery includes an electrode assembly, a can that accommodates the electrode assembly, and a cap assembly connected to the electrode assembly. The electrode assembly includes a positive electrode tab and a negative electrode tab, and the positive electrode tab and the negative electrode tab are electrically connected to the cap assembly via a current collector. Typically, the battery has a configuration in which one electrode assembly is embedded in one battery can. One electrode assembly is accommodated and sealed in the battery can along with an electrolyte to form one "unit cell."

However, such a unit cell has a problem that a large number of electrical components are required when a plurality of unit cells are connected to form a high-power battery module or pack. That is, when constituting a battery module or pack, electrical connection components, such as a bus bar, a wiring harness, a bracket, an insulating material, etc., need to be used to interconnect electrode terminals of each unit cell. These components tend to complicate an internal structure of a battery module or pack and affect the size and weight of the battery module or pack. There is a need for a battery having a structure that reduces the number of components for electrical connection to reduce the weight of the battery pack and enables a compact internal configuration.

The above information disclosed in this Background section is for enhancement of understanding of the background of the present invention, and therefore, it may contain information that does not constitute a related art.

### SUMMARY

According to the invention a battery includes a plurality of electrode assemblies each having a positive electrode plate and a negative electrode plate, each of the positive electrode plate and the negative electrode plate having an electrode tab, a battery can having a plurality of compartment spaces that accommodate each of the plurality of electrode assemblies and expose each electrode tab to an outside, and a cap assembly fixed to the battery can to seal the plurality of compartment spaces, the cap assembly being electrically connected to each electrode tab.

The battery can may include a can body having an upper part, a lower part, and two side parts, the can body opening to the outside, and a plurality of partitions fixed to an inside of the can body, the plurality of partitions defining the plurality of compartment spaces.

Each of the plurality of partitions may be orthogonal to the upper part and the lower part of the can body.

The cap assembly may include a cap plate facing each electrode tab of the plurality of electrode assemblies, a plurality of current collectors on an inner surface of the cap plate, the plurality of current collectors corresponding one-to-one to each electrode tab of the plurality of electrode assemblies, each of the plurality of current collectors being electrically connected to a corresponding electrode tab, terminals supported by the cap plate, the terminals being exposed outside the cap plate, and conductors connecting the terminals to the plurality of current collectors.

The cap assembly may further include a connector electrically connecting neighboring current collectors of the plurality of current collectors, the connector connecting the plurality of electrode assemblies inside the battery can in series.

The cap assembly may further include a connector electrically connecting neighboring current collectors of the plurality of current collectors, the connector connecting the plurality of electrode assemblies inside the battery can in parallel.

The cap assembly may further include an insulator insulating the plurality of current collectors and the terminals from the cap plate.

The conductors may be included in the insulator.

The plurality of current collectors may each have a structure including a bent metal plate, a part of each of the current collectors may be welded to a corresponding electrode tab, and another part of each of the plurality of current collectors may be fixed to the insulator.

According to the invention a battery module or pack includes a plurality of batteries each including a plurality of electrode assemblies, each of the plurality of electrode assemblies having a positive electrode plate and a negative electrode plate, each of the positive electrode plate and the negative electrode plate having an electrode tab, a battery can having a plurality of compartment spaces, each of which accommodates an electrode assembly of the plurality of electrode assemblies and opens each electrode tab to an outside, and a cap assembly fixed to two sides of the battery can to seal the plurality of compartment spaces, the cap assembly being electrically connected to each electrode tab, a connection part electrically connecting the plurality of batteries, and a housing accommodating the plurality of batteries, the plurality of batteries being connected by the connection part.

The battery can may include a can body having an upper part, a lower part, and two side parts, the can body opening to the outside, and a plurality of partitions fixed to an inside of the can body, the plurality of partitions defining the plurality of compartment spaces.

Each of the plurality of partitions may be orthogonal to the upper part and the lower part of the can body.

The cap assembly may include a cap plate facing each electrode tab of each of the plurality of electrode assemblies, a plurality of current collectors on an inner surface of the cap plate, the plurality of current collectors corresponding one-to-one to each electrode tab of the plurality of electrode assemblies, each of the plurality of current collectors being electrically connected to a corresponding electrode tab, terminals supported by the cap plate, the terminals being exposed outside the cap plate, and conductors connecting the terminals to the plurality of current collectors.

The cap assembly may further include a connector electrically connecting neighboring current collectors of the plurality of current collectors, the connector connecting the plurality of electrode assemblies inside the battery can in series.

The cap assembly may further include a connector electrically connecting neighboring current collectors of the plurality of current collectors, the connector connecting the plurality of electrode assemblies inside the battery can in parallel.

The cap assembly may further include an insulator insulating the plurality of current collectors and the terminals from the cap plate.

The conductors may be included in the insulator.

The plurality of current collectors each may have a structure including a bent metal plate, and wherein a part of each of the current collectors may be welded to a corresponding electrode tab, and wherein another part of each of the plurality of current collectors is fixed to the insulator.

According to the invention a method of manufacturing a battery includes preparing a battery can having a plurality of compartment spaces, the plurality of compartment spaces being partitioned by partitions and open to an outside, mounting electrode assemblies having electrode tabs inside each of the plurality of compartment spaces of the battery can, and fixing a cap assembly electrically to two sides of the battery can, the cap assembly being connected to the electrode tabs to the two sides of the battery can.

The cap assembly may include a cap plate facing the electrode tabs of the electrode assemblies, the cap plate being coupled to the battery can, current collectors on an inner surface of the cap plate, the current collectors corresponding one-to-one to the electrode tabs of the electrode assemblies, the current collectors being electrically connected to the corresponding electrode tabs, the method further including supporting terminals by the cap plate and exposing the terminals outside the cap plate, and connecting the terminals to the current collectors, wherein fixing the cap assembly includes welding each electrode tab to one of the current collectors.

### BRIEF DESCRIPTION OF THE DRAWINGS

Features will become apparent to those of ordinary skill in the art by describing in detail exemplary embodiments with reference to the attached drawings, in which:
FIG. 1 is a perspective view of a battery according to an embodiment of the present invention;
FIG. 2 is a plan view of the battery illustrated in FIG. 1;
FIG. 3 is a cutaway exploded perspective view of the battery of FIG. 1;
FIG. 4 is a view for describing an internal structure of the battery of FIG. 1;
FIG. 5 is a cutaway plan view of a part of the battery illustrated in FIG. 1;
FIG. 6 is a cross-sectional view of a cap assembly illustrated in FIG. 3;
FIG. 7 is a view illustrating electrode assemblies connected in parallel inside the battery according to an embodiment of the present invention;
FIG. 8 is a view illustrating a cap assembly of FIG. 7 to which a connector is applied;
FIG. 9 is a view for describing a circuit configuration of the cap assembly illustrated in FIG. 8;
FIG. 10 is a view illustrating a structure in which electrode assemblies are connected in series inside the battery according to an embodiment of the present invention;
FIG. 11 is a view illustrating a connector applied to cap assemblies at both sides illustrated in FIG. 10;
FIGS. 12 and 13 are views for describing a circuit configuration of the cap assembly illustrated in FIG. 11;
FIG. 14 is a configuration diagram illustrating a modified example of the battery according to an embodiment of the present invention;
FIG. 15 is a perspective view separately illustrating a cap assembly of FIG. 14;
FIG. 16 is a cross-sectional view of the cap assembly illustrated in FIG. 15;
FIG. 17 is an enlarged view of portion A in FIG. 16;
FIG. 18 is a view illustrating a circuit configuration of the cap assembly when electrode assemblies are connected in parallel in the battery illustrated in FIG. 14;
FIGS. 19 and 20 are views for describing the circuit configuration of the cap assembly when the electrode assemblies are connected in parallel in the battery illustrated in FIG. 14;
FIG. 21 is a configuration diagram illustrating batteries that are electrically connected according to an embodiment of the present invention;
FIG. 22 is a view illustrating a battery module or pack to which the batteries according to the embodiment of the present invention are applied;
FIG. 23 is a view illustrating the battery module or pack of FIG. 22 mounted in a vehicle; and
FIG. 24 is a view for describing a method of manufacturing a battery according to an embodiment of the present invention.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" if describing embodiments of the present invention relates to "one or more embodiments of the present invention." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent ruls.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present invention and is not intended to limit the present invention.

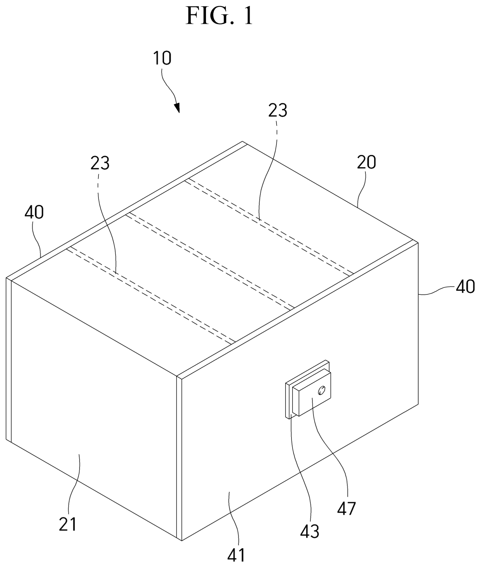

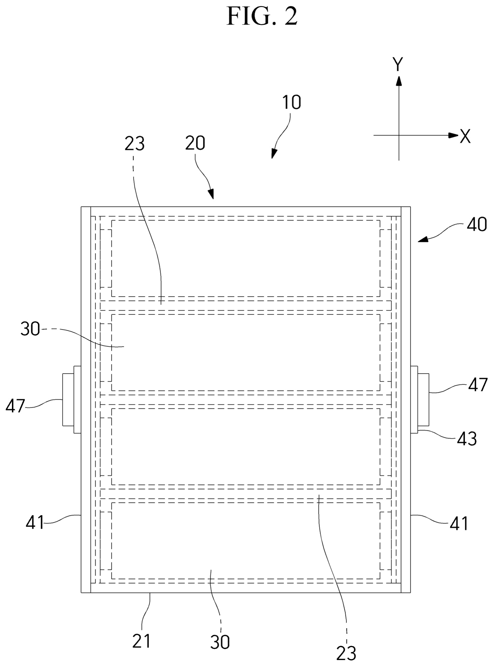

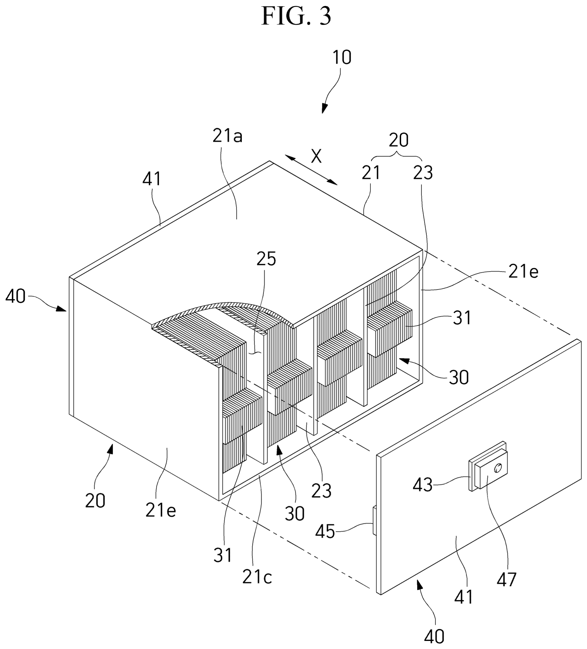

FIG. 1 is a perspective view illustrating an exterior of a battery 10 according to an embodiment of the present invention, and FIG. 2 is a plan view of the battery illustrated in FIG. 1. In addition, FIG. 3 is a cutaway exploded perspective view of the battery of FIG. 1.

As illustrated, the battery 10 according to the present embodiment may include a plurality of electrode assemblies 30 and a battery can 20.

The plurality of electrode assemblies 30 are each embedded (or accommodated) in one of a plurality of compartment spaces 25 (see FIG. 3) to be described below and are separated from each other. The plurality of electrode assemblies 30 accommodated in the plurality of compartment spaces 25 is separated from the electrode assembly in a neighboring compartment space. In addition, electrode tabs 31 are formed at both end portions of each of the plurality of electrode assemblies 30 (e.g., and bundled together on both end portions). The electrode tabs 31 are located at opposite ends.

The plurality of electrode assemblies 30 inside the plurality of compartment spaces 25 may be formed by winding or stacking a positive electrode plate, a separator, and a negative electrode plate.

When the plurality of electrode assemblies 30 are a winding type (jelly roll), a winding axis may be parallel to a longitudinal direction (an X direction of FIG. 2) of the plurality of compartment spaces 25. In addition, the plurality of electrode assemblies 30 may be a stack type rather than the winding type. However, the shape of the electrode assembly 15 may vary. In addition, the plurality of electrode assemblies 30 may be a Z-stack type electrode assembly in which a positive electrode plate and a negative electrode plate are inserted into both sides of a separator bent to a Z-stack.

The form of the electrode assembly in the present embodiment may be applied in any of various ways. However, the electrode tabs are located at opposite sides. For example, the positive electrode tab and the negative electrode tab are located at opposite ends. That is, the electrode assembly may have a structure similar to an electrode assembly of the type applied to a side terminal type secondary battery cell.

The negative electrode plate may be formed by having a base substrate made of a metal foil such as copper, a copper alloy, nickel, or a nickel alloy coated with a negative electrode active material such as graphite or carbon and may include an electrode tab (or an uncoated portion) that is an area in which the negative electrode active material is not coated. The electrode tab can be a passage for current flow between the negative electrode plate and a terminal 47. In some examples, the negative electrode tab may be formed by cutting it in advance so that it protrudes to one side when manufacturing the negative electrode plate, and may protrude further to one side than the separator without separate cutting.

The positive electrode plate is formed by applying a positive electrode active material such as a transition metal oxide to a substrate formed of a metal foil such as aluminum or an aluminum alloy, and may include an electrode tab (or a non-coated portion) that is a region where the positive electrode active material is not applied. The positive electrode tab can be a passage for current flow between the positive electrode plate and the other of the terminal 47. In some examples, the positive electrode tab can be formed by cutting it in advance so that it protrudes to the other side when manufacturing the positive electrode plate, and can protrude further to the other side than the separator without separate cutting.

The separator functions to prevent a short-circuit between the negative electrode plate and the positive electrode plate while allowing movement of lithium ions. The separator may be made of, for example, a polyethylene film, a polypropylene film, a polyethylene-polypropylene film, or the like.

Materials that can be used in the above electrode assembly are as follows.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel oxide, a lithium cobalt oxide, a lithium manganese oxide, a lithium iron phosphate compound, a cobalt-free nickel-manganese oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{d}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂

(0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but may vary.

The negative electrode active material includes a material capable of reversibly intercalating/deintercalating lithium ions, a lithium metal, an alloy of lithium metal, a material capable of doping and dedoping lithium, or a transition metal oxide.

The material capable of reversibly intercalating/deintercalating lithium ions may be a carbon negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si negative electrode active material or a Sn negative electrode active material may be used as the material capable of being doped and undoped with lithium. The Si negative electrode active material may be silicon, a silicon-carbon composite, SiOₓ (0<x≤2), a Si alloy, or a combination thereof.

The silicon-carbon composite may be a composite of silicon and amorphous carbon. According to an embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particles and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99.5 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate, an ester, an ether, a ketone, an alcohol solvent, an aprotic solvent, and may be used alone or in combination of two or more.

In addition, when a carbonate solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, but may vary.

The organic material and the inorganic material may be mixed in one coating layer or may be in the form of a coating layer including (or containing) an organic material and a coating layer including (or containing) an inorganic material which are stacked on each other.

Meanwhile, the battery can 20 may provide the plurality of compartment spaces 25 that may accommodate each of the plurality of electrode assemblies 30. Four surfaces (upper, lower, left, and right surfaces) of the compartment space may be closed, and the remaining two surfaces may be open in the X direction. This description gives an example in which the plurality of compartment spaces 25 number four and are formed in the battery can, but the number of compartment spaces may be implemented variously through various embodiments.

The battery can 20 may include a can body 21 and a plurality of partitions 23.

The can body 21 may have an upper part 21a, a lower part 21c, and two side parts 21e and may be open in the X direction. The upper part 21a and the lower part 21c are spaced a predetermined distance from each other and are parallel to each other. In addition, the two side parts 21e are formed integrally with both end portions of the upper part 21a and the lower part 21c. The two side parts 21e may have a right angle with respect to the upper part 21a or the lower part 21c. The two side parts 21e are parallel to each other and spaced apart from each other.

In addition, the plurality of partitions 23 may be fixed to the inside of the can body 21 and may partition an internal space of the can body 21 into the plurality of compartment spaces 25. The plurality of partitions 23 have a predetermined thickness and are parallel to each other. In addition, an upper end portion of each partition of the plurality of partitions 23 is formed integrally with the upper part 21a, and a lower end portion thereof is formed integrally with the lower part 21c. Each of the plurality of partitions 23 is orthogonal to the upper part 21a and the lower part 21c. A distance between the plurality of partitions 23 may be implemented in any of various ways through other embodiments.

The plurality of partitions 23 may completely block the adjacent compartment space of the plurality of compartment spaces 25. That is, the adjacent compartment spaces do not meet each other beyond the plurality of partitions 23. The plurality of electrode assemblies 30 accommodated in each of the plurality of compartment spaces 25 may be completely separated from the adjacent of the plurality of electrode assemblies 30 with the plurality of partitions 23 interposed therebetween.

The plurality of compartment spaces 25 accommodates the plurality of electrode assemblies 30 and an electrolyte and is sealed by the plurality of partitions 23 at both sides, parts of the upper part 21a and the lower part 21c, and a part of the cap assembly 40. In particular, the plurality of partitions 23 completely separates the adjacent of the plurality of compartment spaces 25 so that the plurality of electrode assemblies 30 accommodated in each compartment space may be maintained independently from the adjacent electrode assembly. Accordingly, the plurality of partitions 23 physically separates the adjacent compartment spaces and allows adjacent "battery cells" to operate without mutual interference while sharing the plurality of partitions 23.

The cap assembly 40 is fixed to both sides of the battery can to seal the plurality of compartment spaces 25 and is electrically connected to the electrode tabs 31 of the plurality of electrode assemblies 30. The cap assembly 40 are fixed to the opposite sides to face each other with the battery can 20 interposed therebetween. A method of coupling the cap assembly 40 to the battery can 20 may be a laser welding method.

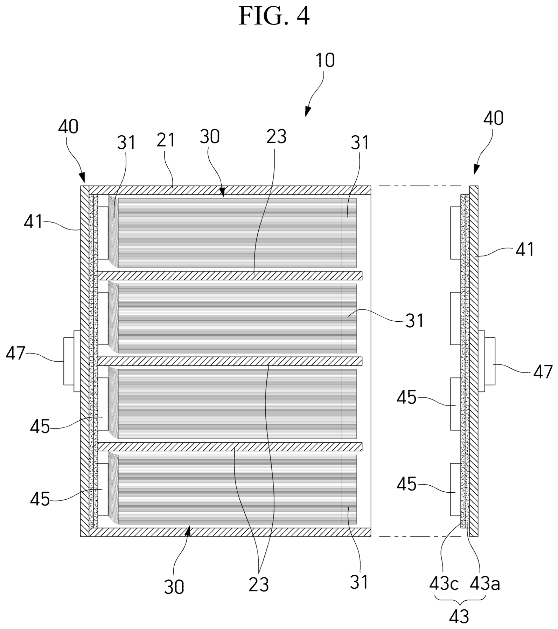

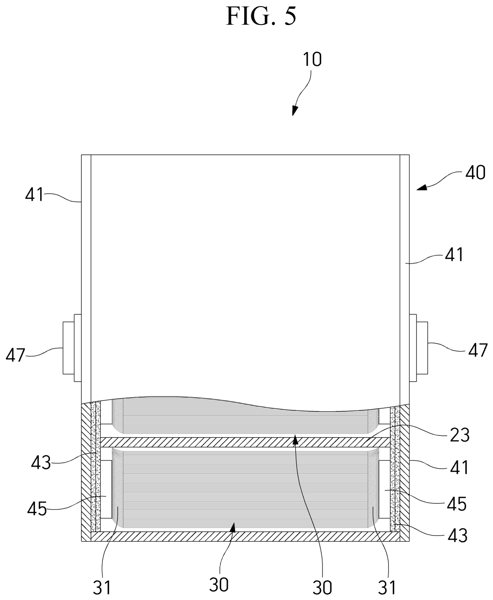

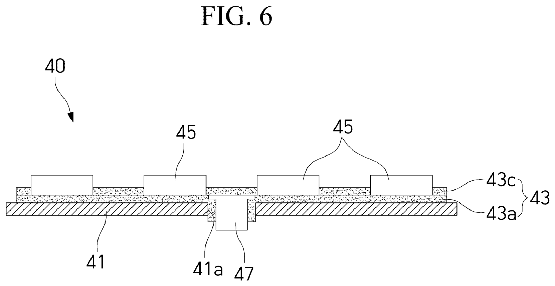

FIG. 4 is a view for describing the internal structure of the battery 10 of FIG. 1, FIG. 5 is a cutaway plan view of a part of the battery, and FIG. 6 is a cross-sectional view of the cap assembly 40 illustrated in FIG. 3.

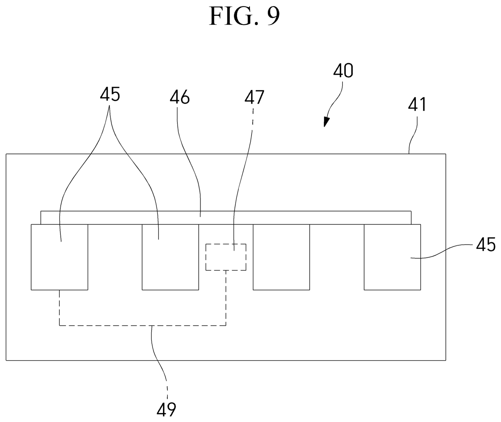

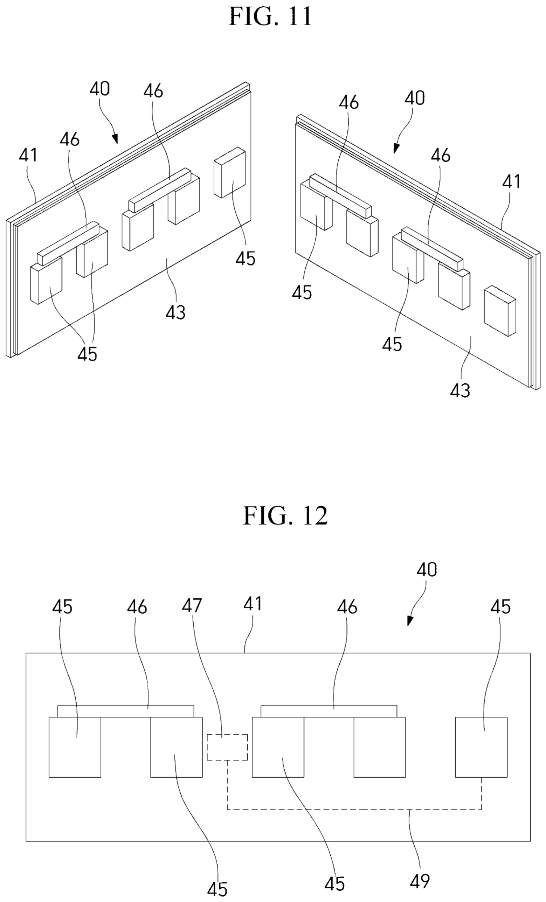

As illustrated, the cap assembly 40 may include a cap plate 41, a plurality of a current collector 45, a terminal 47, a conductor 49 (see FIGS. 9 and 12), and an insulator 43.

The cap plate 41 is a quadrangular plate-shaped member having a predetermined thickness and may allow the terminal 47 to pass through a central portion thereof. The terminal 47 may be supported by the cap plate 41, exposed to the outside of the cap plate 41, and connected to an external electric circuit. An edge of the cap plate 41 may be fixed to the can body 21 by a laser welding method.

Each of the plurality of current collectors 45 is a member that is located on an inner surface of the cap plate 41, corresponds one-to-one to the electrode tabs 31 of each of the plurality of electrode assemblies 30, and is electrically connected to the corresponding electrode tab in front thereof. Each of the plurality of current collectors 45 may be fixed to the electrode tabs 31 by a laser welding method.

Each of the plurality of current collectors 45 may be separated from the cap plate 41 by the insulator 43. The insulator 43 insulates the cap plate 41 and each of the plurality of current collectors 45. A current passing through the plurality of current collectors 45 does not leak to the cap plate 41 because of the insulator 43.

In addition, the insulator 43 may insulate the plurality of current collectors 45 and the terminal 47 from the cap plate 41. That is, the plurality of current collectors 45 are separated from the cap plate 41, and the terminal 47 is separated from the cap plate 41.

The insulator 43 may include a first insulator 43a and a second insulator 43c. The first insulator 43a and the second insulator 43c may have a structure that is stacked in the form of a sheet having a predetermined thickness. The first insulator 43a is in close contact with the inner surface of the cap plate 41, and a part thereof is inserted into a terminal passage 41a.

The terminal passage 41a is a through hole in which the terminal 47 is mounted. The first insulator 43a inserted into the terminal passage 41a may be in close contact with an inner surface of the terminal passage 41a, and the terminal 47 can be prevented from coming in contact with the inner surface of the terminal passage. An insulation state of the terminal 47 with respect to the cap plate 41 can be maintained by the first insulator 43a.

In addition, the second insulator 43c may be fixedly adhered to the first insulator 43a. The second insulator 43c stably supports the terminal 47. In addition, the plurality of current collectors 45 may be fixed tightly to the first insulator 43a after passing through the second insulator 43c. The plurality of current collectors 45 may protrude inward (in a direction in which the electrode assembly is located) from the second insulator 43c and may be electrically coupled to the electrode tabs 31.

In some embodiments, the plurality of current collectors 45 may be electrically connected to the terminal 47 through the conductor 49 (see FIG. 9). The conductor 49 is an electrical connection member, such as a wire, a plate, etc., which electrically connects the plurality of current collectors 45 to the terminal 47 and may be fixed between the first insulator 43a and the second insulator 43c. The conductor 49 may be concealed inside the insulator 43. Additional description of the conductor 49 will be given below.

FIG. 5 illustrates the cap assembly 40 coupled to both sides of the battery can 20 on which the plurality of electrode assemblies 30 is mounted. As illustrated, the electrode tabs 31 of the plurality of electrode assemblies 30 is fixed to the plurality of current collectors 45. Since each of the plurality of current collectors 45 is connected to the terminal 47 through the conductor 49, the plurality of electrode assemblies 30 may ultimately supply power to the outside or receive external charging power.

Meanwhile, the plurality of electrode assemblies 30 accommodated inside the battery can 20 may be connected in series and/or in parallel. A connection method of the plurality of electrode assemblies 30 may be designed according to a required output power. According to the connection method of the electrode assembly, the line structure of the cap assembly 40 may vary.

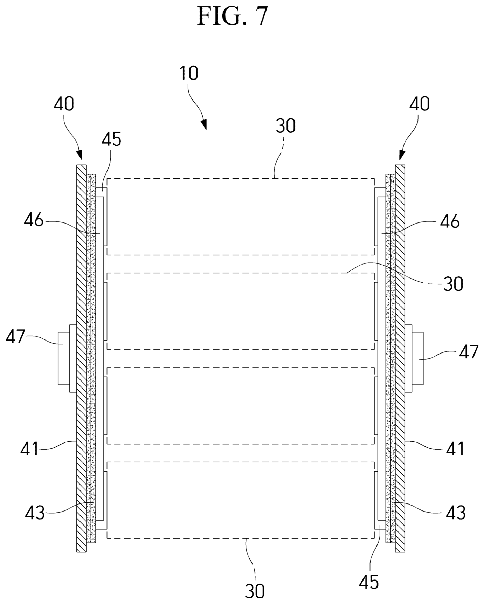

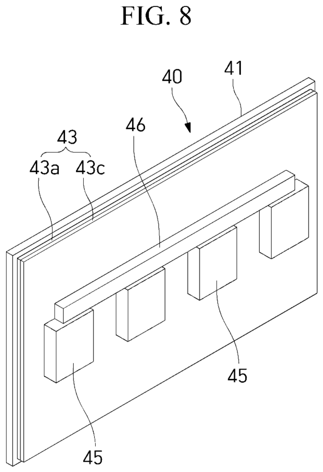

FIG. 7 is a view for describing the electrode assemblies connected in parallel inside the battery according to an embodiment of the present invention, FIG. 8 is a view for describing the cap assembly of FIG. 7 to which a connector 46 is applied, and FIG. 9 is a view for describing a circuit configuration of the cap assembly illustrated in FIG. 8.

As illustrated, to connect the plurality of electrode assemblies 30 mounted on the battery can 20 in parallel, the plurality of current collectors 45 may be connected using one of the connector 46. The connector 46 is a component for electrically integrating the plurality of current collectors 45 and may be applied to both the cap assembly 40 located at the right side and the cap assembly 40 located at the left side of FIG. 7. The left and right cap assemblies may have the same structure and have the form of FIG. 8 as an example.

As illustrated in FIGS. 8 and 9, all of the plurality of current collectors 45 may be connected by one of the connector 46, and the plurality of current collectors 45 may be connected to the terminal 47 through the conductor 49.

Accordingly, power applied to the terminal 47 of the cap assembly 40 may be supplied to one of the plurality of current collectors 45 through the conductor 49, and then guided to all of the plurality of current collectors 45 via the connector 46. The power applied to all of the plurality of current collectors 45 may be applied to the plurality of electrode assemblies 30 through the electrode tabs 31.

Likewise, the power charged in the plurality of electrode assemblies 30 may be output to the plurality of current collectors 45, then moved toward the plurality of current collectors 45 (to which the conductor 49 is connected) via the connector 46, and then supplied to the terminal 47 through the conductor 49. Power may be supplied to an external load from the terminal 47.

FIGS. 7 to 9 are an example of the structure of the cap assembly 40 of the battery 10 in which the plurality of electrode assemblies 30 are connected in parallel.

Meanwhile, the structure of the cap assembly 40 of the battery 10 in which the plurality of electrode assemblies 30 are connected in series is as follows.

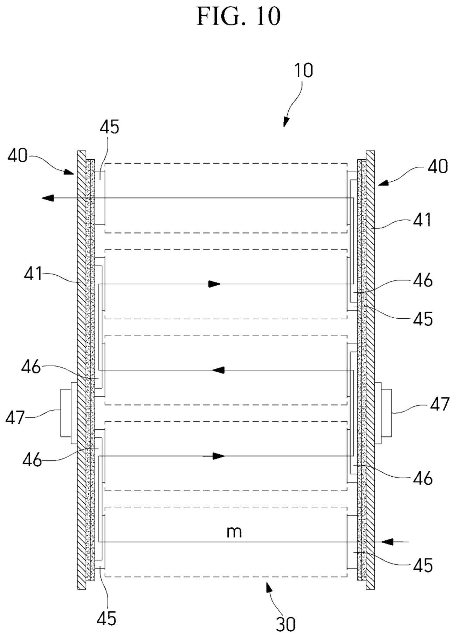

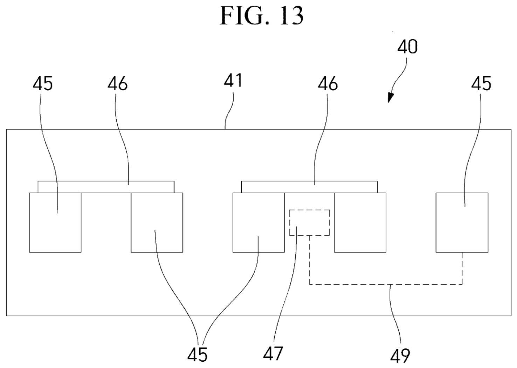

FIG. 10 is a view illustrating a structure in which the electrode assemblies are connected in series inside the battery according to an embodiment of the present invention, and FIG. 11 is a view illustrating the cap assemblies at both sides illustrated in FIG. 10 to which a connector is applied. In addition, FIGS. 12 and 13 are views for describing a circuit configuration of the cap assembly illustrated in FIG. 11. The left cap assembly of FIG. 11 and the cap assembly of FIG. 12 are the left cap assembly of FIG. 10. In addition, the right cap assembly of FIG. 12 and the cap assembly of FIG. 13 are the right cap assembly of FIG. 10.

For reference, to implement the battery 10 in a serial manner, the number of current collectors of the cap assembly 40 may be an odd number. As illustrated in FIG. 10, a current flowing into the terminal 47 of the right cap assembly of FIG. 10 may sequentially pass through the plurality of electrode assemblies 30 and the connector 46 and may be discharged through the terminal 47 of the left cap assembly. To enable such a current flow, polarities of the neighboring electrode assemblies may be disposed in opposite directions.

As illustrated in FIGS. 11 and 12, the current collectors two-by-two from the left side are connected to the connector 46 in the left one of the cap assembly 40. In addition, the last right current collector is connected to the terminal 47 through the conductor 49.

Similarly, as illustrated in FIGS. 11 and 13, the plurality of current collectors 45 two-by-two from the left side are connected to the connector 46 in the right one of the cap assembly 40, and the right one of the plurality of current collectors 45 is connected to the terminal 47 through the conductor 49.

With such a circuit configuration, as illustrated in FIG. 10, one circuit through which a DC current (indicated by "m") may pass may be formed. The shape of the connector 46 is illustrated simply in the drawings for this description, but the shape of the connector 46 may be implemented in any of various ways.

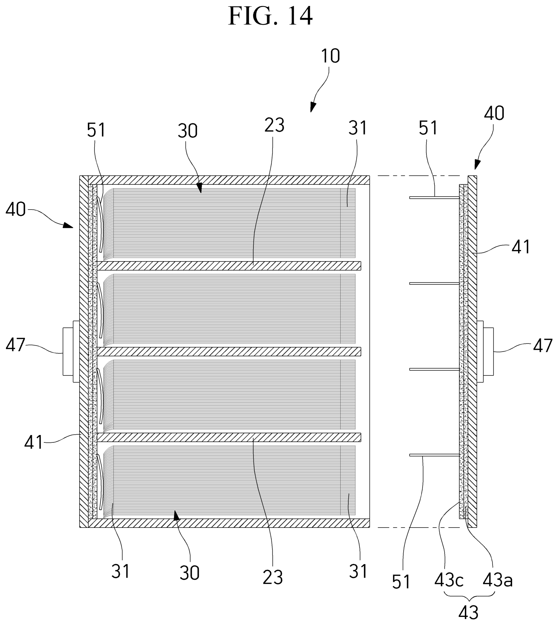

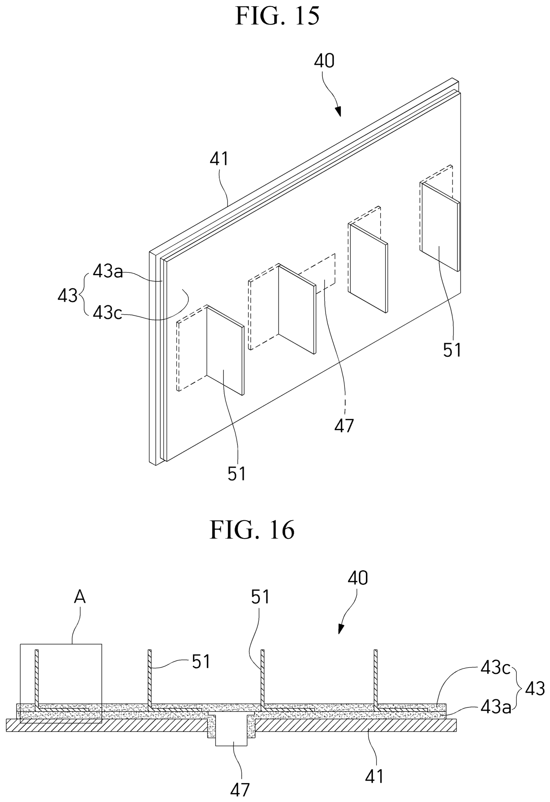

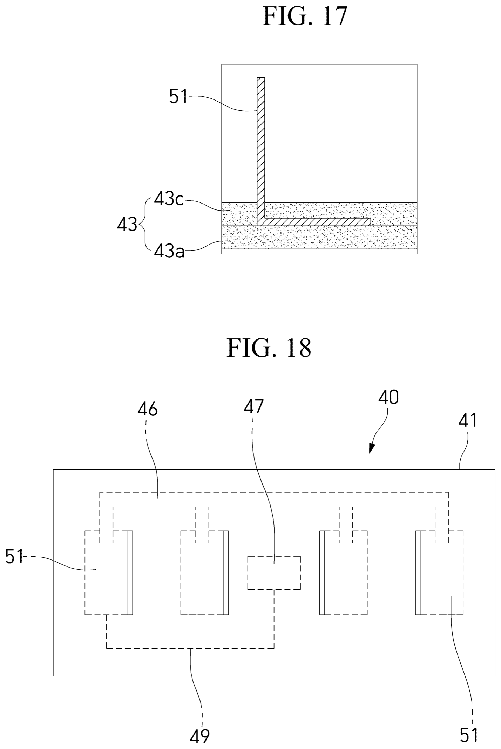

FIG. 14 is a configuration diagram illustrating a modified example of the battery 10 according to an embodiment of the present invention, and FIG. 15 is a perspective view separately illustrating the cap assembly of FIG. 14. In addition, FIG. 16 is a cross-sectional view of the cap assembly illustrated in FIG. 15, and FIG. 17 is an enlarged view of portion A in FIG. 16.

As illustrated, each of a plurality of current collectors 51 may have a shape that is bent at a right angle. That is, as illustrated in FIGS. 14 to 17, each of the plurality of current collectors 51 may have a shape in which a central portion of a quadrangular metal plate having a predetermined thickness is bent at a right angle. In addition, a part of each of the plurality of current collectors 51 may be fixedly embedded between the first insulator 43a and the second insulator 43c, and the remaining part may extend toward the electrode assembly. A portion extending toward the electrode assembly may be welded to the electrode tabs 31 as illustrated in FIG. 14.

FIG. 18 is a view illustrating a circuit configuration of the cap assembly 40 in the battery 10 in which the electrode assemblies are connected in parallel. The other of the cap assembly 40 is located at the opposite side with the electrode assembly interposed therebetween also has the same configuration.

As described with reference to FIG. 9, the plurality of current collectors 51 are connected in parallel through the connector 46, and the current collector at one side is connected to the terminal 47 through the conductor 49. Accordingly, the current transmitted through the terminal 47 at one side may be simultaneously transmitted to the plurality of current collectors 51 through the conductor 49 and the connector 46 and then moved to the plurality of electrode assemblies 30.

Likewise, the current of the electrode assembly may flow to the terminal 47 at the opposite side through each of the plurality of current collectors 51, the connector 46, and the conductor 49.

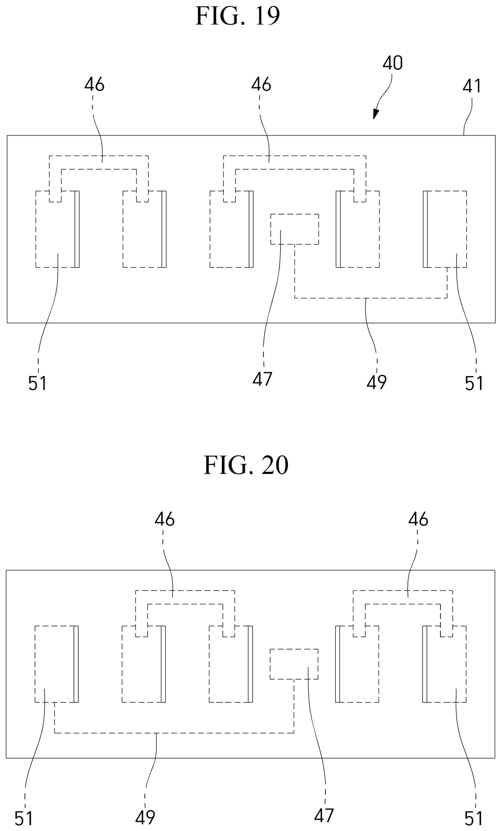

FIGS. 19 and 20 are views illustrating a circuit configuration of the cap assembly in the battery 10 in which the electrode assemblies are connected in series.

In the case of the cap assembly 40 illustrated in FIG. 19, the plurality of current collectors 51 two-by-two from the left side are connected to the connector 46, and the plurality of current collectors 51 at the right end portion is connected to the terminal 47 through the conductor 49. In the cap assembly 40 of FIG. 20, the plurality of current collectors 51 two-by-two from the right side are connected to the connector 46, and the current collector at the left end portion is connected to the terminal 47 through the conductor 49.

An operation method of the cap assembly 40 having such a circuit configuration is as described with reference to FIGS. 12 and 13.

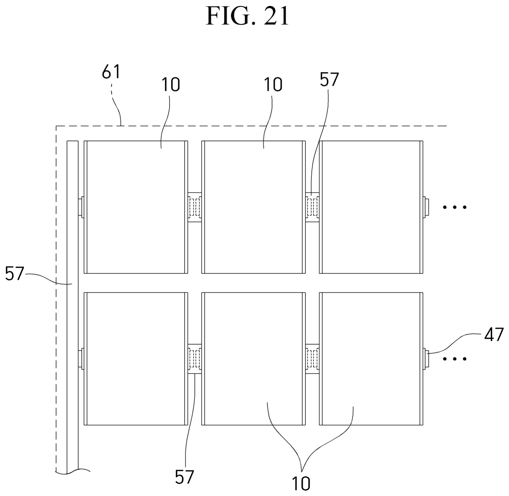

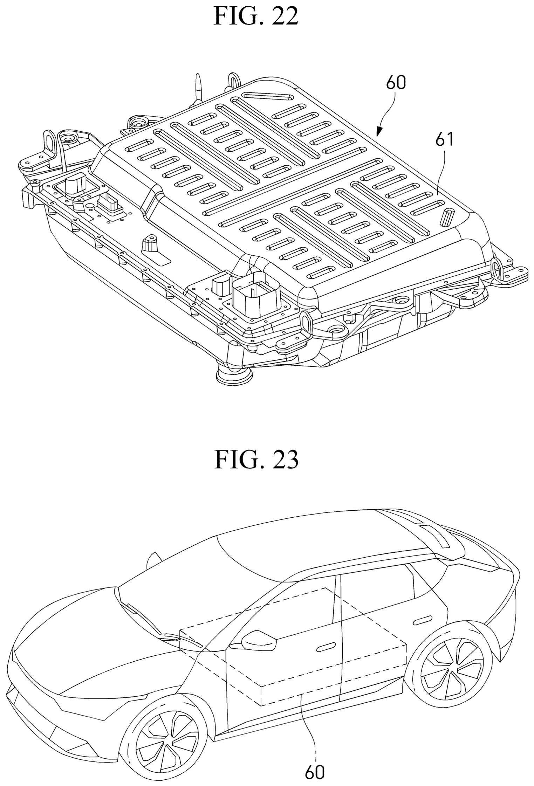

FIG. 21 is a configuration diagram of the battery module or pack 60 (see also FIG. 22) according to an embodiment of the present invention.

As illustrated, the battery module or pack 60 according to the present embodiment may include a plurality of the batteries 10, a connection part 57, and a housing 61. The term "battery module or pack" is used here because "battery module" and "battery pack" are used interchangeably by those who skilled in the art.

Multiple of the batteries 10 may be electrically connected through the connection part 57 while arranged inside the housing 61. The connection part 57 may be a bus bar connecting two of the terminal 47 of adjacent of the batteries 10. All of the multiple of the batteries 10 may be integrated through the connection part 57 to obtain a desired output power. The housing 61 serves to accommodate and seal the battery 10, the connection part 57, accessories, etc. The shape of the housing 61 may be implemented in any of various ways.

FIG. 22 is a view illustrating the battery module or pack 60 according to an embodiment of the present invention.

The battery module or pack 60 may be manufactured by allowing a plurality of the batteries 10 to be embedded in the housing 61 designed to be mounted on an actual product. The pack housing 61 may include fasteners and electrical outlets necessary for product mounting. In FIG. 22, for convenience of illustration, components including a bus bar, a cooling unit, external terminals for electrically connecting batteries, etc., are omitted. The battery module or pack may be mounted on a vehicle. The vehicle may be, for example, an electric vehicle, a hybrid electric vehicle, or a plug-in hybrid electric vehicle. The vehicle may be a four-wheeled vehicle or a two-wheeled vehicle but may vary.

FIG. 23 is a view illustrating the battery module or pack of FIG. 22 mounted in a vehicle.

FIG. 23 illustrates the battery module or pack 60 according to an embodiment of the present invention, which is mounted under a vehicle body of a vehicle. The vehicle is operated by receiving power from the battery module or pack 60 according to an embodiment of the present invention.

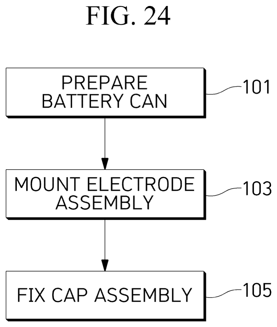

FIG. 24 is a view for describing a method of manufacturing a battery according to an embodiment of the present invention.

As illustrated, the method of manufacturing a battery according to the present embodiment may include a battery can preparing operation 101, an electrode assembly mounting operation 103, and a cap assembly fixing operation 105.

The battery can preparing operation 101 is a process of preparing the battery can 20. As described, the battery can 20 is a structure having a plurality of compartment spaces 25 that are partitioned by the plurality of partitions 23 and open to the outside. Repeated description of the battery can 20 will be omitted.

The electrode assembly mounting operation 103 is a process of mounting the plurality of electrode assemblies 30 in each of the plurality of compartment spaces 25 of the battery can 20. The electrode tabs 31 at both ends of the plurality of electrode assemblies 30 installed in the plurality of compartment spaces 25 may open outward from the plurality of compartment spaces 25.

Subsequently, the cap assembly fixing operation 105 is a process of fixing the cap assembly 40 to both sides of the battery can 20. While the cap assembly fixing operation 105 is performed, the plurality of current collectors 45 and the plurality of current collectors 51 of the cap assembly 40 may be welded to the electrode tabs 31, and the cap plate 41 may also be laser-welded to the can body 21.

As noted above, the electrode assembly is accommodated and sealed in the battery can along with an electrolyte to form one "unit cell." However, such a unit cell has a problem that a large number of electrical components are required when a plurality of unit cells are connected to form a high-power battery module or pack. That is, when constituting a battery module or pack, electrical connection components, such as a bus bar, a wiring harness, a bracket, an insulating material, etc., need to be used to interconnect electrode terminals of each unit cell. These components tend to complicate an internal structure of a battery module or pack and affect the size and weight of the battery module or pack. There is a need for a battery having a structure that reduces the number of components for electrical connection to reduce the weight of the battery module or pack and enables a compact internal configuration.

The present invention is directed to providing a battery, a method of manufacturing a battery, and a secondary battery module or pack having a structure in which a plurality of electrode assemblies are separately accommodated inside one can, and thus it is possible to significantly reduce the number of electrical connection components and reduce the size and weight of a battery module or pack.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. A battery (10), comprising:
a plurality of electrode assemblies (30) each having a positive electrode plate and a negative electrode plate, each of the positive electrode plate and the negative electrode plate having an electrode tab (31);
a battery can (20) having a plurality of compartment spaces (25) that accommodate each of the plurality of electrode assemblies (30) and expose each electrode tab (31) to an outside; and
a cap assembly (40) fixed to the battery can (20) to seal the plurality of compartment spaces (25), the cap assembly (40) being electrically connected to each electrode tab (31).

2. The battery (10) as claimed in claim 1, wherein the battery can (20) comprises:
a can body (21) having an upper part (21a), a lower part (21c), and two side parts (21e), the can body (21) opening to the outside; and
a plurality of partitions (23) fixed to an inside of the can body (21), the plurality of partitions (23) defining the plurality of compartment spaces (25).

3. The battery (10) as claimed in claim 2, wherein each of the plurality of partitions (23) is orthogonal to the upper part (21a) and the lower part (21c) of the can body (20).

4. The battery (10) as claimed in any of the preceding claims, wherein the cap assembly (40) comprises:
a cap plate (41) facing each electrode tab (31) of the plurality of electrode assemblies (30);
a plurality of current collectors (45) on an inner surface of the cap plate (41), the plurality of current collectors (45) corresponding one-to-one to each electrode tab (31) of the plurality of electrode assemblies (30), each of the plurality of current collectors (45) being electrically connected to a corresponding electrode tab (31);
terminals (47) supported by the cap plate (41), the terminals (47) being exposed outside the cap plate (41); and
conductors (49) connecting the terminals (47) to the plurality of current collectors (45).

5. The battery (10) as claimed in claim 4, wherein the cap assembly (40) further comprises a connector (46) electrically connecting neighboring current collectors (45) of the plurality of current collectors (45), the connector (46) connecting the plurality of electrode assemblies (30) inside the battery can (20) in series.

6. The battery (10) as claimed in claim 4 or 5, wherein the cap assembly (40) further comprises a connector (46) electrically connecting neighboring current collectors (45) of the plurality of current collectors (45), the connector (46) connecting the plurality of electrode assemblies (30) inside the battery can (20) in parallel.

7. The battery (10) as claimed in claim 4 or 5, wherein the cap assembly (40) further comprises an insulator (43) insulating the plurality of current collectors (45) and the terminals (47) from the cap plate (41).

8. A battery module (60), comprising:
a plurality of batteries (10) each comprising:
a plurality of electrode assemblies (30), each of the plurality of electrode assemblies (30) having a positive electrode plate and a negative electrode plate, each of the positive electrode plate and the negative electrode plate having an electrode tab (31);
a battery can (20) having a plurality of compartment spaces (25), each of which accommodates an electrode assembly (30) of the plurality of electrode assemblies (30) and opens each electrode tab (31) to an outside; and
a cap assembly (40) fixed to two sides of the battery can (20) to seal the plurality of compartment spaces (25), the cap assembly (40) being electrically connected to each electrode tab (31);
a connection part (57) electrically connecting the plurality of batteries (10); and
a housing (61) accommodating the plurality of batteries (10), the plurality of batteries (10) being connected by the connection part (57).

9. The battery module (60) as claimed in claim 8, wherein the battery can (20) comprises:
a can body (21) having an upper part (21a), a lower part (21c), and two side parts (21c), the can body (21) opening to the outside; and
a plurality of partitions (23) fixed to an inside of the can body (21), the plurality of partitions (23) defining the plurality of compartment spaces (25).

10. The battery module (60) as claimed in claim 8, wherein each of the plurality of partitions (23) is orthogonal to the upper part (21a) and the lower part (21c) of the can body (21).

11. The battery module (60) as claimed in any of the claims 8 to 10, wherein the cap assembly (40) comprises:
a cap plate (41) facing each electrode tab (31) of each of the plurality of electrode assemblies (30);
a plurality of current collectors (45) on an inner surface of the cap plate (41), the plurality of current collectors (45) corresponding one-to-one to each electrode tab (31) of the plurality of electrode assemblies (30), each of the plurality of current collectors (45) being electrically connected to a corresponding electrode tab (31);
terminals (47) supported by the cap plate (41), the terminals (47) being exposed outside the cap plate (41); and
conductors (49) connecting the terminals (47) to the plurality of current collectors (45).

12. The battery module (60) as claimed in claim 11, wherein the cap assembly (40) further comprises a connector (46) electrically connecting neighboring current collectors (45) of the plurality of current collectors (45), the connector (46) connecting the plurality of electrode assemblies (30) inside the battery can (20) in one of a serial manner and a parallel manner.

13. The battery module (60) as claimed in claim 11 or 12, wherein the cap assembly (40) further comprises an insulator (43) insulating the plurality of current collectors (45) and the terminals (47) from the cap plate (41).

14. A method of manufacturing a battery (10), the method comprising:
preparing a battery can (20) having a plurality of compartment spaces (25), the plurality of compartment spaces (25) being partitioned by partitions (23) and open to an outside;
mounting electrode assemblies (30) having electrode tabs (31) inside each of the plurality of compartment spaces (25) of the battery can (20); and
fixing a cap assembly (40) electrically to two sides of the battery can (20), the cap assembly (40) being connected to the electrode tabs (31) to the two sides of the battery can (20).

15. The method as claimed in claim 14, wherein:
the cap assembly (40) comprises:
a cap plate (41) facing the electrode tabs (31) of the electrode assemblies (30), the cap plate (41) being coupled to the battery can (20); and
current collectors (45) on an inner surface of the cap plate (41), the current collectors (45) corresponding one-to-one to the electrode tabs (31) of the electrode assemblies (30), the current collectors (45) being electrically connected to the corresponding electrode tabs (30);
the method further comprises:
supporting terminals (47) by the cap plate (41) and exposing the terminals (47) outside the cap plate (41);
connecting the terminals (47) to the current collectors (45); and
fixing the cap assembly (40) includes welding each electrode tab (31) to one of the current collectors (45).
